# EUROPÄISCHE PATENTSCHRIFT

(11) **EP 1 212 564 B1**
(45) Veröffentlichungstag und Bekanntmachung des Hinweises auf die Patenterteilung: **05.11.2003**
(21) Anmeldenummer: 00956382.6
(22) Anmeldetag: 03.08.2000
(51) Int. Cl.: F16K 37/00

(54) **VORRICHTUNG ZUM ÜBERPRÜFEN EINES SICHERHEITSVENTILS**
DEVICE FOR CHECKING A SAFETY VALVE
DISPOSITIF POUR CONTROLER UNE SOUPAPE DE SECURITE

(30) Priorität: 21.08.1999 DE 19939695
(43) Veröffentlichungstag der Anmeldung: 12.06.2002
(73) Patentinhaber: Messer Griesheim GmbH, 65933 Frankfurt am Main (DE)
(72) Erfinder: TOCHA, Klaus, 40764 Langenfeld (DE)
(86) Internationale Anmeldenummer: EP0007510
(87) Internationale Veröffentlichungsnummer: WO01014777

(56) Entgegenhaltungen:
- EP-A- 0 007 769
- EP-A- 0 028 661
- DE-A- 3 809 233
- GB-A- 2 041 171
- US-A- 1 637 743
- US-A- 4 949 288

## Beschreibung

Die Erfindung betrifft eine Vorrichtung zum Überprüfen eines auf einem Druckbehälter angeordneten Sicherheitsventils.

Aus der DE 35 08 685 C2 ist ein sogenanntes Vollhub-Sicherheitsventil bekannt, das einen in dem Gehäuse des Sicherheitsventils geführten federbelasteten Kegel und einen Ventilsitz aufweist, wobei die Feder den Kegel gegen den Ventilsitz andrückt. Der Ventilsitz ist an einem vorderen Ende einer mit dem Druckbehälter in Verbindung stehenden Düse angeordnet. Übersteigt der Betriebsdruck innerhalb des Druckbehälters einen vorgegebenen Wert, der durch die Federkraft der den Kegel vorspannenden Feder definiert ist, so wird der Kegel entgegen der Federkraft weggedrückt und der federbelastete Kegel wird zurückgeschoben und führt einen Hub von begrenzter Höhe, einen Vollhub, aus. Sinkt der Betriebsdruck innerhalb des Druckbehälters wieder unterhalb des vorgegebenen Wertes ab, so drückt die Feder den Kegel wieder gegen den Ventilsitz und verschließt somit das Sicherheitsventil wieder.

Das zuvor beschriebene Sicherheitsventil muß unabsperrbar den Druckbehälter absichern. Um die Sicherheit zu gewährleisten, ist eine wiederkehrende Prüfung des Sicherheitsventils notwendig. Dabei ist es bei einer Reihe von Sicherheitsventilen, die aus dem Stand der Technik bekannt sind, erforderlich, eine Überprüfung erst nach einer Außerbetriebnahme der den Druckbehälter enthaltenen Anlage durchzuführen. Dieses gilt nur dann nicht, wenn mindestens zwei Sicherheitsventile hinter einem speziellem Wechselventil redundant installiert sind. Zur Überprüfung der Sicherheitsventile wird dann das Wechselventil umgeschaltet, so daß beide Sicherheitsventile einzeln für sich überprüft werden können.

Gasversorgungsanlagen, die Druckbehälter mit den zuvor beschriebenen Sicherheitsventilen aufweisen, werden zum Teil Ober lange Zeit betrieben. Dabei kommt es immer häufiger zu Problemen bei der wiederkehrenden Prüfung der Sicherheitsventile. Die Probleme bestehen nicht zuletzt darin, daß das Wartungspersonal nur dann eine Sicherheitsüberprüfung durchführen kann, wenn die Gasversorgungsanlage außer Betrieb genommen ist.

Aus der DE 38 09 233 A1 sowie aus der EP 0 007 769 A1 sind Vorrichtungen bekannt, bei denen Sicherheitsventile während des Betriebes überprüft werden können. In den Gegenständen dieser Druckschriften wird eine in Öffnungsrichtung des Ventils wirkende Kraft kontinuierlich gesteigert. Aus der zur Öffnung des Ventils erforderlichen Kraft wird der Öffnungsdruck des Sicherheitsventils ermittelt. Nachteilig bei diesen vorbekannten Vorrichtungen ist jedoch, daß die sicherheitstechnische Funktion des Sicherheitsventils während des Prüfvorgangs außer Kraft gesetzt wird.

Aus dem Stand der Technik sind weiterhin Sicherheitsventile in Großanlagen, wie beispielsweise Kraftwerken, Dampferzeugern oder chemischen Produktionsanlagen bekannt, für die Prüfungsvorrichtungen existieren. Derartige, aufwändig gestaltete Prüfeinrichtungen sind beispielsweise aus der EP-A-0028661 oder der US 4 949 288 vorbekannt Bei diesen Prüfeinrichtungen wird eine mit einer Kraftmesseinrichtung zusammenwirkende Spindel entgegen der Kraft einer den Ventilkegel auf den Ventilsitz eines Sicherheitsventils andrückenden Feder hochgezogen. Die Bewegung der Spindel erfolgt in der Regel hydraulisch, etwa durch Öl- oder Luftdruck. Die dabei auftretenden Kräfte, Bewegungen und Betriebsdrücke werden simultan mit elektronischen Messegeräten erfasst und hieraus per Rechner möglichst genaue Werte für den Ansprechdruck des überprüften Sicherheitsventils ermittelt.

Für die Funktionsüberprüfung kleiner Sicherheitsventile sind diese Einrichtungen jedoch zu aufwendig. Außerdem ist auch bei diesen Prüfeinrichtungen keine Anwendung möglich, bei der die sicherheitstechnische Funktion des zu prüfenden Sicherheitsventils während der Überprüfung erhalten bleibt.

Der vorliegenden Erfindung liegt daher das technische Problem zugrunde, die aus dem Stand der Technik bekannte Vorrichtung derart auszugestalten und weiterzubilden, daß eine Überprüfung des Sicherheitsventils unter Aufrechterhaltung der sicherheitstechnischen Funktion des zu prüfenden Sicherheitsventils ermöglicht wird.

Erfindungsgemäß ist das zuvor aufgezeigt technische Problem durch eine Vorrichtung zum Überprüfen eines auf einem Druckbehälter angeordneten Sicherheitsventils mit den Merkmalen des Anspruches 1 gelöst Mit dem Kegel ist eine Zugstange verbunden, die ein Rastelement aufweist und eine Längsrichtung vorgibt. In einem vorgegebenen Abstand in Längsrichtung zum Gehäuse des Sicherheitsventils ist ein Widerlager angeordnet. Weiterhin ist eine Kraftmeßvorrichtung vorgesehen, die relativ zum Widerlager verstell- und festlegbar angeordnet ist. Erfindungsgemäß ist ein Rasthaken mit der Kraftmeßvorrichtung verbunden und steht mit dem Rastelement, das an der Zugstange ausgebildet ist, lösbar in Eingriff. Die lösbare Verbindung zwischen dem Rasthaken und dem Rastelement der Zugstange ist derart ausgebildet, daß die Zugstange in Öffnungsrichtung des Sicherheitsventils unabhängig vom Rasthaken über den gesamten Hub beweglich ist. Somit ist einerseits zum Überprüfen des Sicherheitsventils ein Anheben der Zugstange über die Kraftmeßvorrichtung und den Rasthaken möglich, so daß der Kegel vom Ventilsitz abgehoben wird. Andererseits kann bei einem Überschreiten des vorgegebenen Ansprechsdruckes des Sicherheitsventils sich der Kegel unabhängig von dem Rasthaken in Öffnungs- und Schließrichtung verstellen, um einen Überdruck aus dem Druckbehälter abzulassen. Das Sicherheitsventil kann also überprüft werden, ohne daß der Druckbehälter außer Betrieb genommen werden muß.

In bevorzugter Weise ist das Rastelement als Vertiefung, insbesondere als umlaufende Nut ausgebildet, die an dem dem Widerlager zugewandten Ende eine Anlagefläche für den Rasthaken und am abgewandten Ende eine, vorzugsweise konisch, ansteigende Fläche aufweist. Der Rasthaken kann dann mit der Anlagefläche in Eingriff gebracht werden, um das Rastelement in Öffnungsrichtung des Sicherheitsventils zu verstellen. Steigt dagegen der Druck innerhalb des Druckbehälters über den vorgegebenen Druck an, so wird der Kegel durch diesen Betriebsdruck angehoben, wodurch der Rasthaken von der Anlagefläche getrennt wird und der Rasthaken wird beispielsweise entlang der ansteigenden Fläche des Rastelementes außer Eingriff mit diesem gebracht oder unter Anwendung einer Federkraft von der Zugstange weggeschwenkt. Somit kann der Kegel einen Vollhub ausführen und Gas aus dem Druckbehälter ablassen. Dieses geschieht dann unabhängig von der an dem Sicherheitsventil befestigten Überprüfungsvorrichtung.

In weiter bevorzugter Weise ist der Rasthaken mittels einer Gelenkverbindung drehbar an der Kraftmeßvorrichtung befestigt, so daß der Rasthaken durch Verschwenken in Eingriff mit dem Rastelement gebracht werden kann, die Kraftmeßvorrichtung dagegen nur linear verstellbar zu sein braucht. Dazu ist in weiter bevorzugter Weise eine Feder vorgesehen, die den Rasthaken entgegen oder in Richtung des Eingreifens mit dem Rastelement der Zugstange vorspannt Drückt die Feder den Rasthaken von einem Eingreifen mit dem Rastelement weg, so wird der Rasthaken beim Einjustieren der Vorrichtung mit der Anlagefläche des Rastelementes mechanisch in Eingriff gebracht und unter Zugspannung in Längsrichtung versetzt. Durch Reibungskräfte verbleiben das Rastelement und der Rasthaken solange in Eingriff miteinander, bis die Zugspannung nachläßt und die Feder den Rasthaken wegdrückt. Dieses geschieht insbesondere dann, wenn ein Überdruck das Sicherheitsventil während der Überprüfung mit der Vorrichtung öffnet und den Kegel mit der Zugstange in Richtung des Widerlagers verstellt.

Zieht die Feder dagegen den Rasthaken in Richtung der Zugstange, so ist ein automatisches Eingreifen des Rasthakens mit dem Rastelement möglich. Dazu weist das der Zugstange zugewandte Ende des Rasthakens eine schräg verlaufende Gleitfläche auf, die von der der Zugstange zugewandten Seite nach außen eine aus der Richtung der Kraftmeßvorrichtung gesehen ansteigenden Verlauf aufweist. Somit gleitet beim Annähern des Rasthakens an das Rastelement die Gleitfläche entlang der äußeren Kante des distalen Endes der Zugstange, wodurch der Rasthaken nach außen verstellt wird. Wird der Rasthaken weiter an die Zugstange angenähert, so rastet dieser unter der Spannung der Feder in das Rastelement ein, das als Vertiefung ausgebildet ist. Ist dagegen das Rastelement als nach außen vorstehender Flansch ausgebildet, so rastet der Rasthaken unterhalb des vorstehenden Flansches ein.

Für ein mechanisches Justieren des Rasthakens kann in weiter bevorzugter Weise ein Hebel mit dem Rasthaken verbunden sein, mit dem ein Verstellen des Rasthakens entgegen der Federkraft möglich ist Somit kann beim Anbringen der Überprüfungsvorrichtung der Rasthaken manuell in oder außer Eingriff mit dem Rastelement gebracht werden.

Weitere Merkmale und Vorteile der vorliegenden Erfindung werden anhand der detaillierten Beschreibung von Ausführungsbeispielen deutlich, wobei auf die beigefügte Zeichnung bezug genommen wird. In der Zeichnung zeigen
- Fig. 1: ein erstes Ausführungsbeispiel einer erfindungsgemäßen Vorrichtung im Querschnitt,
- Fig. 2: ein zweites Ausführungsbeispiel einer erfindungsgemäßen Vorrichtung ausschnittsweise im Querschnitt,
- Fig. 3: ein drittes Ausführungsbeispiel einer erfindungsgemäßen Vorrichtung im Querschnitt und
- Fig. 4: das in Fig. 3 dargestellte Ausführungsbeispiel in einer Ansicht entlang der Linie IV-IV in Fig. 3.

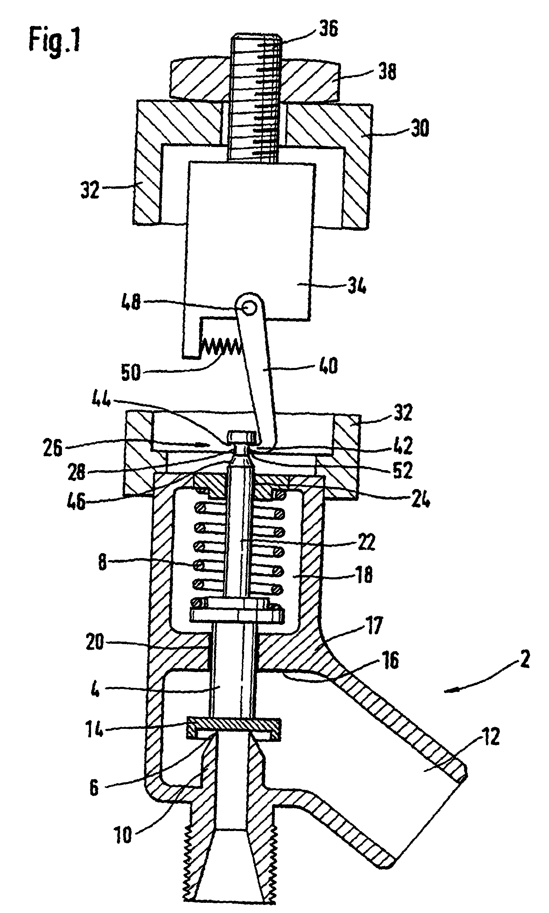

In Fig. 1 ist ein erstes Ausführungsbeispiel einer erfindungsgemäßen Vorrichtung zum Überprüfen eines auf einem Druckbehälter angeordneten Sicherheitsventils 2. Das Sicherheitsventil 2 weist einen Kegel 4 und einen Ventilsitz 6 auf, wobei eine Feder 8 den Kegel 4 gegen den Ventilsitz 6 andrückt. Der Ventilsitz 6 stellt das vordere Ende einer Düse 10 dar, die für den Gaseintritt in das Sicherheitsventil 2 vorgesehen ist In Fig. 1 tritt das Gas von unten in die Düse 10 ein, das dann, wenn der Gasdruck innerhalb der Düse, also innerhalb des Druckbehälters (nicht dargestellt) so groß ist, daß die von diesem Gasdruck ausgeübte Kraft auf den Kegel 4 ausreicht, um die Kraft der Feder 8 zu überwinden. Dann ist der Kegel 4 vom Ventilsitz 6 abgehoben und das Gas strömt in den Gasauslaß 12.

Im geöffneten Zustand ist zwischen dem Ventilsitz 6 und der Unterseite des Kegels 4 die sogenannte Vollhubkammer ausgebildet. Dazu weist der Kegel 4 an dem Ventilsitz 6 zugewandten Ende einen Flansch 14 auf, der im angehobenen Zustand an der der Düse 10 gegenüberliegend angeordneten Gehäusewand 16 des Ventilgehäuses 17 zur Anlage kommt und somit den maximalen Hub, also den Vollhub vorgibt.

Die Feder 8 ist in einem Steuerdruckraum 18 angeordnet, der vom Ventilgehäuse 17 gebildet wird. Für eine relative Bewegung des Kegels 4 zum Ventilgehäuse 17 ist weiterhin eine Führung 20, die vorliegend als Gleitlager ausgebildet ist, vorgesehen.

Der Steuerdruckraum 18 und der Gasauslaß 12 sind durch eine, in der Fig. 1 nicht dargestellte, Druckleitung verbunden, so daß kurz nach der Öffnung der Sicherheitsventils 2 der Steuerdruckraum 18 ebenfalls mit dem hohen Druck beaufschlagt wird, der zusammen mit der Kraft der Feder 8 zu einem schnellen Schließen des Sicherheitsventils führt.

Zur Überprüfung der Funktionstüchtigkeit des Sicherheitsventils 2 ist es erforderlich, den Ansprechdruck festzustellen und mit dem für das spezielle Sicherheitsventil 2 vorgegebenen Wert zu vergleichen. Dabei ist es Ziel der Erfindung, die Überprüfung durchzuführen, ohne das Sicherheitsventil abzubauen oder anderweitig außer Funktion zu setzen. Das bedeutet, daß auch während der Prüfung des Sicherheitsventils ein ungehinderter Vollhub mit entsprechender Ausblaßleistung stattfinden kann. Dazu weist das erfindungsgemäße Ausführungsbeispiel die folgenden Merkmale auf.

Mit dem Kegel 4 ist eine Zugstange 22 verbunden, die sich durch eine im Ventilgehäuse 17 angeordnete Öffnung 24 hindurch erstreckt. Die Durchführung durch die Öffnung 24 ist dabei mit einem Gleitlager versehen, um reibungsarm eine Axialbewegung der Zugstange und einen Druckaufbau im Steuerdruckraum 18 zu ermöglichen. Weiterhin gibt die Zugstange 22 eine Längsrichtung vor, die in Fig. 1 vertikal verläuft und entlang derer auch der Kegel 4 und die Achse der Düse 10 ausgerichtet sind. Die Zugstange 22 weist ein Rastelement 26 auf, das am vom Kegel 4 abgewandten Ende der Zugstange 22 angeordnet ist. Weiterhin ist im vorliegenden Ausführungsbeispiel das Rastelement 26 als Vertiefung 28 in Form einer umlaufenden Nut ausgebildet.

Wie in Fig. 1 weiterhin dargestellt ist, weist die erfindungsgemäße Vorrichtung ein in Längsrichtung in einem vorgegebenen Abstand zum Ventilgehäuse 17 angeordnetes Widerlager 30 auf. Das Widerlager 30 ist im vorliegenden Ausführungsbeispiel als obere Wand des Gehäuses 32 der Vorrichtung zum Überprüfen des Sicherheitsventils 2 ausgebildet.

Weiterhin weist die Vorrichtung eine Kraftmeßvorrichtung 34 auf, die auch als Kraftaufnehmer bezeichnet werden kann. Die Kraftmeßvorrichtung 34 kann mittels einer damit verbundenen Gewindestange 36 und einer Schraubenmutter 38 relativ zum Widerlager 30 entlang der Längsrichtung verstellt und in einer vorgegebenen Position festgestellt werden.

Ein Rasthaken 40 ist mit der Kraftmeßvorrichtung 34 verschwenkbar verbunden und weist an seinem in Fig. 1 unteren Ende einen Vorsprung 42 auf. Der Vorsprung 42 steht, wie in Fig. 1 dargestellt, mit dem Rastelement 26 der Zugstange 22 in Eingriff. Dadurch kann durch ein Verstellen der Schraubenmutter 38 und ein damit verbundenes Anheben oder Absenken der Kraftmeßvorrichtung 34 die Zugstange 22 verstellt werden.

Wie Fig. 1 zeigt, weist die Vertiefung 28 an dem dem Widerlager 30 zugewandten Ende eine Anlagefläche 44 auf, an der der Vorsprung 42 des Rasthakens 40 während des Eingreifens anliegt. Weiterhin weist die Vertiefung 28 an dem dem Widerlager 30 abgewandten Ende eine konisch ansteigende Gleitfläche 46 auf. Dadurch wird es ermöglicht, daß während des Eingreifens des Rasthakens 40 mit der Vertiefung 28 die Zugstange 22 und somit der Kegel 4 durch einen erhöhten Gasdruck in der Düse 10 in Richtung des Widerlagers 30 angehoben werden kann. Dadurch wird ein Hub des Kegels 4 bis auf den vorgegebenen Vollhub ermöglicht ohne das dieser Hub durch das Eingreifen des Rasthakens 40 mit der Vertiefung 28 beeinträchtigt wird. Somit ist die Zugstange 22 in Öffnungsrichtung des Sicherheitsventils 2 unabhängig vom Rasthaken 40 über einen Vollhub beweglich.

Wie bereits zuvor beschrieben, ist der Rasthaken 40 mittels einer Gelenkverbindung 48 drehbar an der Kraftmeßvorrichtung 34 befestigt, wobei die Achse der Gelenkverbindung 48 im wesentlichen senkrecht zur Längsrichtung angeordnet ist. Weiterhin ist eine Feder 50 vorgesehen, die den Rasthaken 40 in Richtung eines Eingreifens mit dem Rastelement 26 als Zugfeder vorspannt. Somit wird während des Überprüfens des Sicherheitsventils 2 ein dauerhaftes Eingreifen des Rasthakens 40 mit dem Rastelement 26 gewährleistet. Um die Verbindung zwischen Rasthaken 40 und Rastelement 26 herzustellen und wieder zu lösen, ist ein in Fig. 1 nicht dargestellter Hebel vorgesehen, mit dem der Rasthaken 40 entgegen der Kraft der Feder 50 verschwenkt werden kann.

Wie weiterhin in Fig. 1 dargestellt ist, weist das der Zugstange 22 zugewandte Ende des Rasthakens 40, also der Vorsprung 42 eine Gleitfläche 52 auf, die von der der Zugstange 22 zugewandten Seite nach außen eine aus der Richtung der Kraftmeßvorrichtung 34 gesehen ansteigenden Verlauf aufweist. Somit wird dann, wenn die Kraftmeßvorrichtung 34 durch Betätigung der Schraubenmutter 38 in Richtung der Zugstange 22 verstellt wird, durch ein Anliegen der Gleitfläche 52 an dem zugewandten Ende der Zugstange 22 entgegen der Kraft der Feder 50 (Zugfeder) verschwenkt, bis durch ein weiteres Verstellen der Kraftmeßvorrichtung 34 der Vorsprung 42 mit der Vertiefung 28, insbesondere der Anlagefläche 44 in Eingriff gelangt. Somit wird ein automatisches Eingreifen des Rasthakens 40 beim Aufsetzen und Einjustieren der Kraftmeßvorrichtung 34 und des Rasthakens 40 ermöglicht.

Daneben ist es möglich, die Feder 50 als Druckfeder ausgebildet ist und der Rasthaken 40 aus dem Eingriff mit dem Rastelement drückt. Dieses Herausdrücken wird während des Eingreifens durch Reibungskräfte verhindert, die jedoch beim Anheben der Zugstange 22 aufgehoben werden.

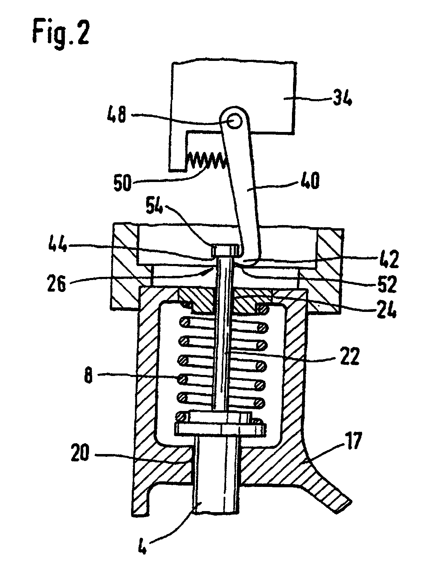

Fig. 2 zeigt ein zweites erfindungsgemäßes Ausführungsbeispiel, das im wesentlichen dem in Fig. 1 dargestellten Ausführungsbeispiel entspricht Daher stellt Fig. 2 auch nur einen Ausschnitt des in Fig. 1 dargestellten Sicherheitsventils mit Vorrichtung zum Überprüfen dar. Der Unterschied zum ersten Ausführungsbeispiel besteht in der Ausgestaltung der Zugstange 22 und des Rastelementes 26. Wie in Fig. 2 dargestellt, ist das Rastelement 26 als Flansch 54 ausgebildet, der eine Anlagefläche 44 aufweist. Der Flansch 54 weist einen gegenüber dem Durchmesser der Zugstange 22 vergrößerten Durchmesser auf, wobei die Zugstange 22 über im wesentlichen den gesamten Verlauf bis zum Kegel 4 einen im wesentlichen unveränderten Durchmesser aufweist Somit kann die Zugstange 22 bei Auftreten eines Überdrucks in der Düse 10 angehoben werden, ohne durch den Rasthaken 40 in der Bewegung behindert zu werden, der von der als Zugfeder ausgebildeten Feder 50 vorgespannt wird. Die vordere Spitze des Vorsprunges 42 des Rasthaken 40 gleitet dann entlang der Oberfläche der Zugstange 22, ohne die Bewegung der Zugstange 22 zu behindern. Denn lediglich die Bewegung der Zugstange 22 in Richtung der geschlossenen Stellung der Sicherheitsventils 2 ist durch des Rasthaken 40 und das Rastelement 26 begrenzt.

Im folgenden wird die Arbeitsweise der beiden zuvor beschriebenen Ausführungsbeispiele erläutert. Die Vorrichtung zum Überprüfen wird auf das Sicherheitsventil 2, dessen nicht dargestellte Verschlußkappe entfernt ist, aufgesetzt. Der Rasthaken 40 wird mit dem Rastelement 26 der Zugstange 22 in Eingriff gebracht und die Schraubenmutter 38 wird angezogen. Diese Situation ist in der Fig. 1 dargestellt Wird die Zugkraft des über die Kraftmeßvorrichtung 34 mit dem Widerlager 30 verbundene Rasthaken 40 durch Anziehen der Schraubenmutter weiter erhöht, so hebt sich der Kegel 4 vom Ventilsitz 6 ab und das Sicherheitsventil 2 beginnt hörbar zu blasen. In diesem Zustand besteht ein Gleichgewicht der Kraft von der Feder 8, der Zugkraft am Rasthaken 40, gemessen durch die Kraftmeßvorrichtung 34, und der druckäquivalenten Kraft unter dem Kegel 4. Wird die Zugkraft des Rasthakens 40 über die sicherheitsspezifischen Geometriedaten in die Druckeinheit bar umgerechnet, so entspricht die Summe von Betriebsdruck und dem von der Kraftmeßvorrichtung 34 ermittelten Druck dem Ansprechdruck des Sicherheitsventils bei beginnendem Öffnen oder Schweben des Kegels 4.

Steigt während der Überprüfung des Sicherheitsventils 2 der Betriebsdruck, also der Gasdruck innerhalb der Düse 10, und nähert sich dieser Betriebsdruck dem Ansprechdruck, so sinkt die Zugkraft am Rasthaken 40 entsprechend ab. Mit Erreichen des Ansprechdruckes löst sich die Zugstange 22 vom Rasthaken 40, so daß mit Erreichen des Ansprechdrucks das Sicherheitsventil 2 unbeeinflußt von der Vorrichtung zum Überprüfen des Ventils seinen Vollhub ausführen kann und somit einen unzulässigen Druckanstieg verhindert.

Wie oben bereits beschrieben worden ist, kann die Feder 50 entweder als Zugoder als Druckfeder ausgebildet sein. Ist die Feder 50 eine Druckfeder, so spannt sie den Rasthaken 40 entgegen der Richtung eines Eingreifens mit der Zugstange 22 vor, so daß dann, wenn sich die Zugstange 22 vom Rasthaken 40 löst, der Rasthaken 40 seitliche verschwenkt wird und sich anschließend die Zugstange 22 über die gesamte Länge des Vollhubes bewegen kann. Das bedeutet, daß das Sicherheitsventil 2 völlig unbeeinflußt von der Vorrichtung zum Überprüfen arbeiten kann. Ist dagegen die Feder 50 als Zugfeder ausgebildet, so bleibt der Rasthaken 40 in Anlage an der Zugstange 22, so daß das vordere Ende des Vorsprunges 42 entlang der Oberfläche der Zugstange 22 gleitet Senkt sich während des Ablassens eines Überdruckes durch die Wirkung der Feder 8 der Kegel 4 zusammen mit der Zugstange 22 wieder ab, so gelangt der Rasthaken 40 erneut mit dem Rastelement 26 in Eingriff.

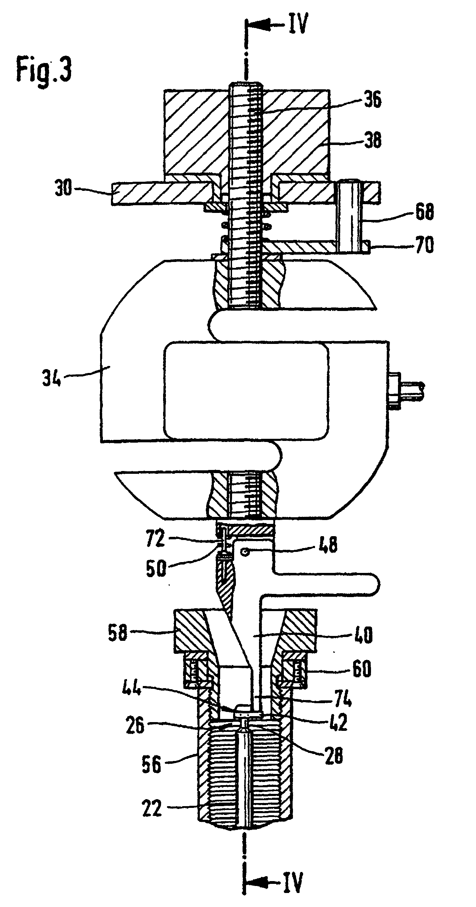

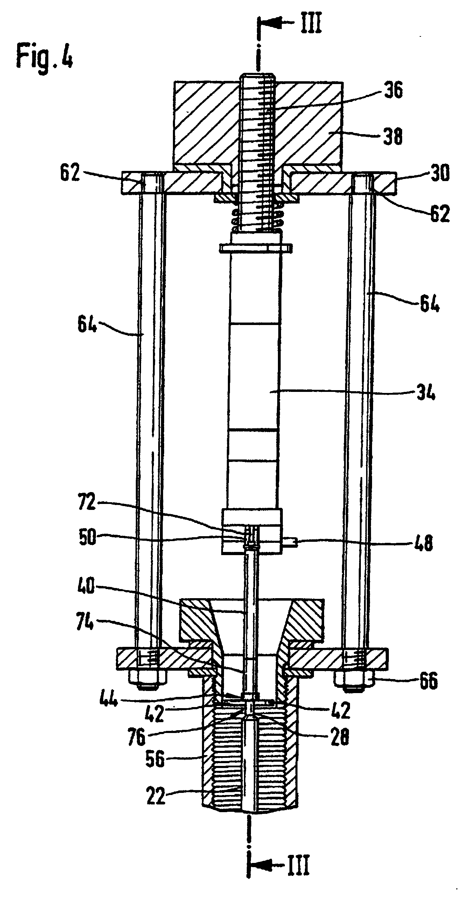

In den Figuren 3 und 4 ist ein drittes Ausführungsbeispiel der vorliegenden Erfindung in Form einer ausgeführten Konstruktion dargestellt. Dabei bezeichnen gleiche Bezugszeichen gleiche Bauteile entsprechend der in den Figuren 1 und 2 dargestellten Ausführungsbeispiele.

Die Zugstange 22 verläuft durch den Innenraum eines Anschlußstutzens 56, der am Ventilgehäuse (in den Figuren 3 und 4 nicht dargestellt) befestigt ist. Mittels einer Rändelschraube 58 ist eine Montageplatte 60 mit dem oberen Ende des Anschlußstutzens 56 verbunden. Weiterhin ist das scheibenförmig ausgebildete Widerlager 30 mit Hilfe von Gewindestangen 62, Abstandhalterohren 64 und Muttern 66 in einem vorgegebenen Abstand zur Montageplatte 60 fixiert angeordnet. In Anlage mit dem Widerlager 30 ist eine Rändelmutter 38, die mit einer Gewindestange 36 wirksam verbunden ist. Am unteren Ende der Gewindestange 36 ist eine Kraftmeßvorrichtung 34 in Form eines Kraftaufnehmers befestigt, so daß die Kraftmeßvorrichtung 34 relativ zum Widerlager linear verstellbar ist. Um eine Drehung der Kraftmeßvorrichtung um die Achse der Gewindestange zu verhindern, sind ein Stift 68 sowie eine Verdrehsicherung 70 mit der Gewindestange 36 verbunden. Am anderen Ende der Kraftmeßvorrichtung 34 ist der Rasthaken 40 um eine Gelenkverbindung 48, die vorliegend als Stift ausgebildet ist, drehbar verbunden. Der Rasthaken 40 ist weiterhin mit einem Hebel 71 verbunden. Weiterhin sind eine Federführung 72 und eine Feder 50 vorgesehen, die in gleicher Weise, wie zuvor beschrieben wurde, entweder als Zug- oder als Druckfeder ausgebildet ist. Am unteren Ende weist der Rasthaken zum einen einen schmalen Abschnitt 74 und einen Vorsprung 42 auf. Der schmale Abschnitt 74 ist derart dimensioniert, daß eine relative Bewegung der Zugstange 22 entlang des schmalen Abschnittes 74 möglich ist Zum anderen weist der Vorsprung 42 eine Ausnehmung 76 auf, die mit der Vertiefung 28 der Zugstange 22 in Eingriff gebracht werden kann. Diese ist insbesondere in Fig. 4 zu erkennen.

Die Funktionsweise der Vorrichtung zum Überprüfen des Sicherheitsventils 2 des dritten Ausführungsbeispiels entspricht der der ersten beiden Ausführungsbeispiele und wird daher an dieser Stelle nicht im Detail erläutert. Es sei lediglich erwähnt, daß mit Hilfe des Hebels der Rasthaken 40 um die Achse der Gelenkverbindung 48 durch Anheben des Hebels verschwenkt werden kann, um beim Aufsetzen und Einjustieren der Vorrichtung zum Überprüfen den Rasthaken 40 mit der Vertiefung 28 in Eingriff zu bringen. Somit ist ein einfaches Montieren und auch Demontieren der Vorrichtung möglich.

## Patentansprüche

1. Vorrichtung zum Überprüfen eines auf einem Druckbehälter angeordneten Sicherheitsventils (2), das einen Kegel (4) und einen Ventilsitz (6) aufweist, wobei eine Feder (8) den Kegel (4) gegen den Ventilsitz (6) andrückt,
- mit einer mit dem Kegel (4) verbundenen Zugstange (22), die ein Rastelement (26) aufweist und eine Längsrichtung vorgibt,
- mit einem in Längsrichtung in einem vorgegebenen Abstand zum Ventilgehäuse (17) des Sicherheitsventils (2) angeordneten Widerlager (30),
- mit einer relativ zum Widerlager (30) verstell- und festlegbaren Kraftmeßvorrichtung (34),
- und mit Verbindungsmitteln zum lösbaren Verbinden der Kraftmeßvorrichtung (34) mit der Zugstange (22),
**dadurch gekennzeichnet,**
- **dass** als Verbindungsmittel ein Rasthaken (40) vorgesehen ist, der mit der Kraftmeßvorrichtung (34) verbunden ist und mit dem Rastelement (26) der Zugstange (22) lösbar in Eingriff steht,
- wobei die lösbare Verbindung zwischen der Zugstange (22) und dem Rasthaken (44) derart ausgebildet ist, daß, unabhängig vom Rasthaken, die Zugstange (22) in Öffnungsrichtung des Sicherheitsventils (2) stets, d.h. auch während der Dauer der Überprüfung des Sicherheitsventils, über den gesamten Hub beweglich ist.

2. Vorrichtung nach Anspruch 1 **dadurch gekennzeichnet, daß** die Zugstange (22) durch das Ventilgehäuse (17) des Sicherheitsventils (2) abgedichtet hindurchgeführt ist.

3. Vorrichtung nach Anspruch 1 oder 2 **dadurch gekennzeichnet, daß** das Rastelement (26) am vom Kegel (4) abgewandten Ende der Zugstange (22) angeordnet ist.

4. Vorrichtung nach einem der Ansprüche 1 bis 3 **dadurch gekennzeichnet, daß** das Rastelement (26) als Vertiefung (28), vorzugsweise als umlaufende Nut, ausgebildet ist.

5. Vorrichtung nach Anspruch 4 **dadurch gekennzeichnet, daß** die Vertiefung (28) an dem dem Widerlager (30) zugewandten Ende eine Anlagefläche (44) für den Rasthaken (40) und am abgewandten Ende eine, vorzugsweise konisch, ansteigende Gleitfläche (46) aufweist.

6. Vorrichtung nach einem der Ansprüche 1 bis 3 **dadurch gekennzeichnet, daß** das Rastelement als Flansch (54) ausgebildet ist.

7. Vorrichtung nach einem der Ansprüche 1 bis 6 **dadurch gekennzeichnet, daß** eine Gewindestange (36) mit der Kraftmeßvorrichtung (34) verbunden ist und eine an dem Widerlager (30) anliegende Schraubenmutter (38) zum Verstellen der Kraftmeßvorrichtung relativ zum Widerlager (30) vorgesehen ist.

8. Vorrichtung nach einem der Ansprüche 1 bis 7 **dadurch gekennzeichnet, daß** der Rasthaken (40) mittels einer Gelenkverbindung (48) drehbar an der Kraftmeßvorrichtung (34) befestigt ist.

9. Vorrichtung nach Anspruch 8 **dadurch gekennzeichnet, daß** eine Feder (50) den Rasthaken (40) entgegen der Richtung eines Eingreifens mit der Zugstange (22) vorspannt.

10. Vorrichtung nach Anspruch 8 **dadurch gekennzeichnet, daß** eine Feder (50) den Rasthaken (40) in Richtung eines Eingreifens mit der Zugstange (22) vorspannt

11. Vorrichtung nach Anspruch 10 **dadurch gekennzeichnet, daß** das der Zugstange (22) zugewandte Ende des Rasthakens (40) eine schräg verlaufende Gleitfläche (52) aufweist, die von der der Zugstange (22) zugewandten Seite nach außen eine aus der Richtung der Kraftmeßvorrichtung (34) gesehen ansteigenden Verlauf aufweist.

12. Vorrichtung nach einem der Ansprüche 8 bis 11 **dadurch gekennzeichnet, daß** ein Hebel (71) mit dem Rasthaken (40) verbunden ist, der ein Verstellen des Rasthakens (40) entgegen der Kraft der Feder (50) ermöglicht.

## Claims

1. Device for checking a safety valve (2) which is arranged on a pressure container and which comprises a cone (4) and a valve seat (6), a spring (8) pressing the cone (4) against the valve seat (6),
- having a pull rod (22) which is connected to the cone (4), has a latching element (26) and predefines a longitudinal direction,
- having an abutment (30) which is arranged in the longitudinal direction at a predefined distance from the valve casing (17) of the safety valve (2),
- having a force measuring device (34) which can be adjusted and fixed relative to the abutment (30),
- and having connecting means for the detachable connection of the force measuring device (34) to the pull rod (22),
**characterized**
- **in that** the connecting means provided is a latching hook (40), which is connected to the force measuring device (34) and is detachably engaged with the latching element (26) of the pull rod (22),
- the detachable connection between the pull rod (22) and the latching hook (44) being formed in such a way that, independently of the latching hook, the pull rod (22) can be moved over the entire stroke in the opening direction of the safety valve (2) at any time, that is to say even during the period of the check on the safety valve.

2. Device according to Claim 1, **characterized in that** the pull rod (22) is led in a sealed manner through the valve casing (17) of the safety valve (2).

3. Device according to Claim 1 or 2, **characterized in that** the latching element (26) is arranged at that end of the pull rod (22) which faces away from the cone (4).

4. Device according to one of Claims 1 to 3, **characterized in that** the latching element (26) is formed as a depression (28), preferably as a circumferential groove.

5. Device according to Claim 4, **characterized in that**, at the end facing the abutment (30), the depression (28) has a contact surface (44) for the latching hook (40) and, at the end facing away, has a sliding surface (46) which rises, preferably conically.

6. Device according to one of Claims 1 to 3, **characterized in that** the latching element is formed as a flange (54).

7. Device according to one of Claims 1 to 6, **characterized in that** a threaded rod (36) is connected to the force measuring device (34), and a nut (38) resting on the abutment (30) is provided in order to adjust the force measuring device relative to the abutment (30).

8. Device according to one of Claims 1 to 7, **characterized in that** the latching hook (40) is fixed to the force measuring device (34) by means of a jointed connection (48) such that it can rotate.

9. Device according to Claim 8, **characterized in that** a spring (50) prestresses the latching hook (40) in the direction opposite to the direction of engagement with the pull rod (22).

10. Device according to Claim 8, **characterized in that** a spring (50) prestresses the latching hook (40) in the direction of engagement with the pull rod (22).

11. Device according to Claim 10, **characterized in that** that end of the matching hook (40) which faces the pull rod (22) has a sliding surface (52) which runs obliquely and, from the side facing the pull rod (22), has a course which rises outwards, as viewed from the direction of the force measuring device (34).

12. Device according to one of Claims 8 to 11, **characterized in that** a lever (71) is connected to the latching hook (40) and permits the latching hook (40) to be adjusted counter to the force of the spring (50).

## Revendications

1. Dispositif de contrôle d'une vanne de sécurité (2) installée sur un réservoir de pression comportant un cône (4) et un siège de soupape (6), un ressort (8) poussant le cône (4) contre le siège de soupape (6), avec
- une tige de traction (22) reliée au cône (4), cette tige ayant un élément d'accrochage (26) et prédéfinissant une direction longitudinale,
- un appui (30) installé dans la direction longitudinale à une distance prédéterminée du corps (17) de la vanne de sécurité (2),
- un dynamomètre (34) réglable et susceptible d'être fixé par rapport à l'appui (30),
- des moyens de liaison pour relier de manière amovible le dynamomètre (34) à la tige de traction (22),
**caractérisé en ce que**
- le moyen de liaison est un crochet (40) relié au dynamomètre (34) et en prise de façon amovible avec l'élément d'accrochage (26) de la tige de traction (22),
- la liaison amovible entre la tige de traction (22) et le crochet (44) étant réalisée de façon qu'indépendamment du crochet, la tige de traction (22) est mobile dans la direction d'ouverture de la vanne de sécurité (2) sur toute la course, toujours c'est-à-dire même pendant la durée de contrôle de la vanne de sécurité.

2. Dispositif selon la revendication 1,
**caractérisé en ce que**
la tige de traction (22) traverse de manière étanche le corps (17) de la vanne de sécurité (2).

3. Dispositif selon l'une quelconque des revendications 1 ou 2,
**caractérisé en ce que**
l'élément d'accrochage (26) est prévu à l'extrémité de la tige de traction (22) à l'opposé de celle du cône (4).

4. Dispositif selon l'une quelconque des revendications 1 à 3,
**caractérisé en ce que**
l'élément d'accrochage (26) est réalisé sous la forme d'une cavité (28) notamment d'une rainure périphérique.

5. Dispositif selon la revendication 4,
**caractérisé en ce que**
la cavité (28) présente à l'extrémité opposée à celle de l'appui (30), une surface d'appui (44) pour le crochet (40) et à l'autre extrémité une surface de glissement (46) remontant de préférence de forme conique.

6. Dispositif selon l'une quelconque des revendications 1 à 3,
**caractérisé en ce que**
l'élément d'accrochage est en forme de bride (54).

7. Dispositif selon l'une quelconque des revendications 1 à 6,
**caractérisé par**
une tige filetée (36) reliée au dynamomètre (34) et un écrou (38) appliqué contre l'appui (30) pour régler le dynamomètre par rapport à l'appui (30).

8. Dispositif selon l'une quelconque des revendications 1 à 7,
**caractérisé en ce que**
le crochet (40) est fixé de manière tournante au dynamomètre (34) par l'intermédiaire d'une liaison articulée (48).

9. Dispositif selon la revendication 8,
**caractérisé en ce qu'**
un ressort (50) assure la précontrainte du crochet (40) dans la direction opposée à la prise avec la tige de traction (22).

10. Dispositif selon la revendication 8,
**caractérisé par**
un ressort (50) qui assure la précontrainte du crochet (40) dans la direction de sa prise avec la tige de traction (22).

11. Dispositif selon la revendication 10,
**caractérisé en ce que**
l'extrémité du crochet (40) tournée vers la tige de traction (22) présente une surface de glissement (52) inclinée ayant un tracé montant vers l'extérieur à partir du côté tourné vers la tige de traction (22), lorsqu'on regarde à partir du dynamomètre (34).

12. Dispositif selon l'une quelconque des revendications 8 à 11,
**caractérisé en ce qu'**
un levier (71) relié au crochet (40) permet de déplacer le crochet (40) contre la force du ressort (50).
